(19) Europäisches Patentamt
European Patent Office
Office européen des brevets

(11) Veröffentlichungsnummer : **0 471 711 B1**

(12) # EUROPÄISCHE PATENTSCHRIFT

(45) Veröffentlichungstag der Patentschrift : **22.09.93 Patentblatt 93/38**

(51) Int. Cl.$^5$ : **C02F 5/12**, C02F 5/14, C02F 1/00

(21) Anmeldenummer : **90906976.7**

(22) Anmeldetag : **10.05.90**

(86) Internationale Anmeldenummer : **PCT/EP90/00752**

(87) Internationale Veröffentlichungsnummer : **WO 90/14314 29.11.90 Gazette 90/27**

(54) **VERWENDUNG VON WASSERLÖSLICHEN COPOLYMERISATEN AUS MONOETHYLENISCH UNGESÄTTIGTEN CARBONSÄUREN UND VINYLIMIDAZOL(DERIVATEN) ALS WASSERBEHANDLUNGSMITTEL.**

Die Akte enthält technische Angaben, die nach dem Eingang der Anmeldung eingereicht wurden und die nicht in dieser Patentschrift enthalten sind.

(30) Priorität : **13.05.89 DE 3915772**

(43) Veröffentlichungstag der Anmeldung : **26.02.92 Patentblatt 92/09**

(45) Bekanntmachung des Hinweises auf die Patenterteilung : **22.09.93 Patentblatt 93/38**

(84) Benannte Vertragsstaaten : **BE DE ES FR GB IT NL SE**

(56) Entgegenhaltungen :
**EP-A- 0 276 464**
**US-A- 3 634 366**
**US-A- 4 243 591**

(73) Patentinhaber : **BASF Aktiengesellschaft**
**Carl-Bosch-Strasse 38**
**D-67063 Ludwigshafen (DE)**

(72) Erfinder : **DENZINGER, Walter**
**Wormser Landstrasse 65**
**D-6720 Speyer (DE)**
Erfinder : **HARTMANN, Heinrich**
**Weinheimer Strasse 46**
**D-6703 Limburgerhof (DE)**
Erfinder : **GOUSETIS, Charalampos**
**Carl-Bosch-Strasse 98**
**D-6700 Ludwigshafen (DE)**
Erfinder : **GOECKEL, Ulrich**
**Leipziger Strasse 6**
**D-6737 Boehl-Iggelheim (DE)**
Erfinder : **RULAND, Alfred**
**Am Weissenacker 3**
**D-6905 Schriesheim (DE)**

**EP 0 471 711 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft die Verwendung von wasserlöslichen Copolymerisaten aus monoethylenisch ungesättigten Carbonsäuren und Vinylimidazolen als Scale-Inhibitoren.

Aus der US-A-3 810 834 ist bekannt, daß man hydrolisierte Polymaleinsäureanhydride, die vor der Hydrolyse ein Molekulargewicht von 300 bis 5000 haben, oder deren wasserlösliche Salze als Wasserbehandlungsmittel einsetzen kann, um die Kesselsteinbildung weitgehend zu unterdrücken bzw. zu verhindern. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäureanhydrids nicht vollständig und die Abtrennung von nichtpolymerisiertem Maleinsäureanhydrid vom Polymerisat schwierig ist, enthalten die Polymaleinsäuren noch beträchtliche Mengen an Maleinsäure.

Aus der US-A 3 755 264 sind niedrigmolekulare Copolymerisate bekannt, die 85 bis 99 Mol% Maleinsäureanhydrid und zur Ergänzung auf 100 Mol% Acrylsäure, Vinylacetat, Styrol oder deren Mischungen einpolymerisiert enthalten. Die Copolymerisate werden durch Copolymerisieren von Maleinsäureanhydrid in trockenen organischen Lösemitteln mit den genannten Monomeren bei Temperaturen von 100 bis 145°C in Gegenwart von Peroxiden hergestellt. Als Peroxide kommen beispielsweise Di-tertiär-Butylperoxid, Acetylperoxid, Dicumylperoxid, Diisopropylpercarbonat und insbesondere Benzoylperoxid in Betracht. Die Anhydridgruppen des Copolymerisats können nach der Polymerisation zu Säuregruppen hydrolysiert bzw. in die Salze überführt werden. Die wasserlöslichen Copolymerisate werden zur Verhinderung der Kesselsteinabscheidung verwendet. Die nach diesem Verfahren erhältlichen Produkte weisen einen sehr hohen Gehalt an nichtpolymerisiertem Maleinsäureanhydrid auf.

Die Verwendung von niedrigmolekularen Polymerisaten der Acrylsäure zur Wasserbehandlung bzw. als Scale-inhibitor ist beispielsweise aus der US-A-3 904 522 und der US-A-3 514 376 bekannt. Aus der US-A-3 709 816 ist bekannt, daß Acrylamidopropansulfonsäure enthaltende Copolymerisate als Wasserbehandlungsmittel geeignet sind. Beispielsweise kommen Copolymerisate aus 2-Acrylamidopropansulfonsäure und Acrylamid in Betracht, das teilweise hydrolisiert ist. Nachteilig ist dabei, daß unvermeidlich Restmonomeranteile von Acrylamid in Polymeren verbleiben, wodurch ihre verwendung nur stark eingeschränkt empfohlen werden kann. Homopolymerisate der Acrylsäure zeigen dagegen befriedigende Wirkung nur gegenüber relativ leicht zu unterdrückenden Belagsarten, wie z.B. Calciumcarbonat.

Aus der US-A-3 634 366 sind hochmolekulare Copolymerisate aus Acrylsäure und 1-Vinyl-2-methyl-imidazol bekannt, die als Flockungsmittel verwendet werden.

Der vorliegenden Erfindung liegt die Aufgabe zugrunde, für die Wasserbehandlung solche Polymerisate zur Verfügung zu stellen, die die Wirksamkeit der bisher verwendeten Polymerisate auf Basis von Acrylsäure erreichen oder sogar übertreffen und die gleichzeitig eine bessere Löslichkeit bei hohen Calciumionenkonzentrationen haben als die bisher verwendeten Polyacrylate. Vor allem sollen besonders hartnäckige Belagsprobleme in wasserführenden Systemen, wie die Bildung von Calciumphosphat und die Abscheidung von Silikatniederschlägen, wirksam unterdrückt werden.

Die Aufgabe wird erfindungsgemäß gelöst durch die Verwendung von wasserlöslichen Copolymerisaten, die als charakteristische Monomere

(a) 99 bis 50 Gew.% monoethylenisch ungesättigte Carbonsäuren mit 3 bis 8 C-Atomen oder deren Salze und

(b) 1 bis 50 Gew.% an Monomeren der Formel

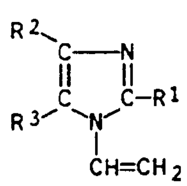

(I),

in der $R^1$, $R^2$, $R^3$ = H, $C^1$- bis $C^4$-Alkyl, Phenyl und Benzyl bedeuten, deren Salze oder Quaternierungsprodukte

einpolymerisiert enthalten und die K-Werte von 10 bis 50 (bestimmt nach H. Fikentscher in 1 %iger wäßriger Lösung bei pH 7 und 25°C) haben, als Scale-Inhibitoren.

Copolymerisate der oben bechriebenen Art sind im Prinzip bekannt. So wird beispielsweise in der US-A 3 634 366 ein Copolymerisat aus Acrylsäure und 1-Vinyl-2-methyl-imidazol beschrieben. Die Copolymerisate werden durch Copolymerisieren der Monomeren in Gegenwart von Polymerisationsinitiatoren hergestellt. Die

erfindungsgemäß zu verwendenden Copolymerisate enthalten als charakteristische Monomere der Gruppe (a) monoethylenisch unsättigte Carbonsäuren mit 3 bis 8 C-Atomen oder deren Salze. Zu diesen Monomeren gehören beispielsweise Acrylsäure, Methacrylsäure, Dimethylacrylsäure, Ethacrylsäure, Maleinsäure, Citraconsäure, Methylenmalonsäure, Allylessigsäure, Vinylessigsäure, Crotonsäure, Fumarsäure, Mesakonsäure und Itakonsäure. Aus dieser Gruppe von Monomeren verwendet man vorzugsweise Acrylsäure, Methacrylsäure oder Maleinsäure sowie Mischungen der genannten Carbonsäuren, insbesondere Mischungen aus Acrylsäure und Maleinsäure zur Herstellung der erfindungsgemäß zu verwendenden Copolymerisate. Diese Monomeren können entweder in Form der freien Säuren oder in partiell oder vollständig neutralisierter Form in den Copolymerisaten vorliegen. Diese Monomeren werden gegebenenfalls mit Alkalimetallbasen, Ammoniak oder Aminen neutralisiert. Von den genannten Basen haben Natronlauge, Kalilauge und Ammoniak besondere praktische Bedeutung. Die Neutralisation kann ebenso gut auch mit Aminen, wie Ethanolamin, Diethanolamin oder Triethanolamin vorgenommen werden. Die Monomeren der Gruppe (a) sind zu 99 bis 50, vorzugsweise 95 bis 70 Gew.% am Aufbau der Copolymerisate beteiligt.

Die Copolymerisate enthalten als charakteristische Monomere der Gruppe (b) Verbindungen der Formel

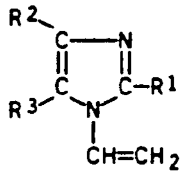

(I),

in der $R^1$, $R^2$, $R^3$ = H, $C_1$ bis $C_4$-Alkyl, Phenyl und Benzyl bedeuten sowie die Salze oder Quaternierungsprodukte der Verbindungen der Formel I einpolymerisiert. Zur Salzbildung neutralisiert man die Monomeren der Formel I mit Säuren, z.B. Salzsäure, Schwefelsäure, Salpetersäure, Phosphorsäure, Ameisensäure, Essigsäure, Propionsäure, Amidosulfonsäure oder p-Toluolsulfonsäure. Die Quaternisierung der Verbindungen der Formel I kann mit den üblichen Quaternisierungsmitteln vorgenommen werden, z.B. Dimethylsulfat, Diethylsulfat, Methylchlorid, Ethylchlorid, Butylchlorid, Ethylhexylchlorid, n-Dodecylchlorid und Benzylchlorid. Auch eine nachträgliche Quaternisierung von Copolymerisaten, die eine Verbindung der Formel I einpolymerisiert enthalten, mit üblichen Quaternisierungsmitteln ist möglich.

Geeignete Verbindungen der Formel I sind beispielsweise 1-vinylimidazol, 1-vinyl-2-methyl-imidazol, 1-vinyl-4-methyl-imidazol, 1-vinyl-5-methyl-imidazol, 1-Vinyl-2-ethyl-imidazol, 1-vinyl-2-propyl-imidazol, 1-Vinyl-2-phenyl-imidazol, 1-Vinyl-4,5-benz-imidazol und 1-Vinyl-2-benz-imidazol. Zur Herstellung der Copolymerisate können die genannten Verbindungen entweder allein oder in Mischung untereinander der Copolymerisation unterworfen werden. Vorzugsweise verwendet man aus dieser Gruppe von Monomeren 1-Vinylimidazol. Der Anteil der Monomeren der Gruppe (b) am Aufbau der Copolymerisate beträgt 1 bis 50, vorzugsweise 5 bis 30 Gew.%.

Die Copolymerisate können zur Modifizierung als weitere Gruppe von Monomeren (c) andere, mit den Monomeren (a) und (b) copolymerisierbare monoethylenisch ungesättigte Monomere einpolymerisiert enthalten. Diese Monomeren werden nur in einer solchen Menge in die Copolymerisate aus (a) und (b) einpolymerisiert, daß noch wasserlösliche Copolymerisate vorliegen. Die Menge an Monomeren (c) kann daher in einem weiten Bereich schwanken. Sofern die Monomeren (c) zur Modifizierung in die Copolymerisate einpolymerisiert werden, beträgt ihr Anteil am Aufbau der Copolymerisate bis zu 20 Gew.%. Zur Modifizierung können beispielsweise Ester, Amide und Nitrile der unter (a) angegebenen Carbonsäuren eingesetzt werden. Bevorzugte Verbindungen dieser Art sind beispielsweise Acrylsäuremethylester, Atrylsäureethylester, Methacrylsäuremethylester, Methacrylsäureethylester, Hydroxyethylacrylat, Hydroxypropylacrylat, Hydroxybutylacrylat, Hydroxyethylmethacrylat, Hydroxypropylmethacrylat, Maleinsäuremonomethylester, Maleinsäuredimethylester, Maleinsäuremonoethylester, Maleinsäurediethylester, Acrylamid, Methacrylamid, N-Dimethylacrylamid, N-tert.-Butylacrylamid, Dimethylaminopropylmethacrylamid, Acrylamidoglykolsäure, Acrylnitril und Methacrylnitril. Außerdem eignen sich als Monomere der Gruppe (c) Sulfosäuregruppen enthaltende Monomere, z.B. Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonsäuregruppen enthaltende monomere, wie Vinylphosphonat, Allylphosphonat und Acrylamidomethanpropanphosphonsäure. Geeignete monomere der Gruppe (c) sind außerdem N-Vinylpyrrolidon, N-Vinylcaprolactam, N-Vinylformamid, N-Vinyl-N-methylformamid, N-Vinylacetamid, N-Vinyl-N-methylacetamid, N-Vinyl-2-methylimidazolin, Diallyldimethyl-ammoniumchlorid, Vinylacetat und Vinylpropionat. Es ist selbstverständlich auch möglich, Mischungen aus den genannten Monomeren der Gruppe (c) einzusetzen, z.B. Acrylester und Vinylacetat oder Acrylamid und Hydroxyethylacrylat. Von den Monomeren der Gruppe (c) die zur Modifizierung der Copolymerisate

aus (a) und (b) verwendet werden, kommen Vinylsulfonsäure, Acrylamidomethanpropansulfonsäure, N-Vinylpyrrolidon, N-Vinylformamid, Dimethyldiallylammoniumchlorid und Vinylacetat bevorzugt in Betracht. Die monomeren der Gruppe (c) sind - sofern sie überhaupt zur Modifizierung in den Copolymerisaten aus (a) und (b) enthalten sind - vorzugsweise in Mengen bis zu 10 Gew.% einpolymerisiert.

Besonders bevorzugt ist die Verwendung von Copolymerisaten, die

(a) 95 bis 70 Gew.% Acrylsäure, Methacrylsäure, Maleinsäure oder Mischungen der genannten Carbonsäuren und

(b) 5 bis 30 Gew.% N-Vinylimidazol sowie

(c) 0 bis 10 Gew.% Vinylsulfonsäure, Acrylamidomethylpropansulfonsäure, N-Vinylpyrrolidon, N-Vinylformamid, Dimethyldiallylammoniumchlorid oder Hydroxypropylacrylat

einpolymerisiert enthalten. Die Copolymerisate werden vorzugsweise in vollständig oder teilweise neutralisierter Form verwendet. Die Copolymerisate haben K-Werte von 10 bis 50, vorzugsweise 15 bis 40 (bestimmt nach H. Fikentscher an 1 gew.%igen Lösungen der Natriumsalze der Copolymerisate bei pH 7 und 25°C).

Die Copolymerisate können nach allen bekannten kontinuierlichen oder diskontinuierlichen Verfahren der Substanz-, Fällungs-, Suspensions- und Lösungspolymerisation in Gegenwart von Polymerisationsinitiatoren hergestellt werden, die unter den Polymerisationsbedingungen Radikale bilden, z.B. anorganische und organische Peroxide, Persulfate, Azoverbindungen und die sogenannten Redoxkatalysatoren.

Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens 2 bei verschiedenen Temperaturen zerfallenden Initiatoren zu arbeiten, nämlich zunächst einen bereits bei niedrigerer Temperatur zerfallenen Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.

Temperatur: 40 bis 60°C:

Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxi-2,4-dimethylvaleronitril), 2,2'-Azobis-(2-methyl-N-phenylpropionamidin)dihydrochlorid, 2,2'-Azobis(2-methylpropionamidin)dihydrochlorid

Temperatur: 60 bis 80°C:

Tert.-Butylperpivalat, Dioctanoylperoxid, Dilauroylperoxid, 2,2'-Azobis-(2,4-dimethylvaleronitril)

Temperatur: 80 bis 100°C:

Dibenzoylperoxid, tert.-Butylper-2-ethylhexanoat, tert.-Butylpermaleinat, 2,2'-Azobis-(isobutyronitril), Dimethyl-2,2'-azobisisobutyrat

Temperatur: 100 bis 120°C:

Bis-(tert.-butylperoxid)-cyclohexan, tert.-Butylperoxiisopropylcarbonat, tert.-Butylperacetat

Temperatur: 120 bis 140°C:

2,2-Bis-(tert.-butylperoxi)-butan, Dicumylperoxid, di-tert.-amylperoxid, Di-tert.-butylperoxid

Temperatur: >140°C:

p-Methanhydroperoxid, Penanhydroperoxid, Cumolhydroperoxid, tert.-Butylhydroperoxid

Verwendet man zusätzlich noch Salze oder Komplexe von Schwermetallen, z.B. Kupfer-, Kobalt-, Mangan-, Eisen-, Nickel- und Chromsalze oder organische Verbindungen wie Benzoin, Dimethylanilin, Ascorbinsäure zusammen mit mindestens einem der oben angegebenen Initiatoren, so können die Halbwertszeiten der angegebenen radikalbildenden Initiatoren verringert werden. So kann man beispielsweise tert.-

Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.% eines Polymerisationsinitiators oder einer Mischung mehrerer Polymerisationsinitiatoren. Als Redoxkomponenten setzt man 0,01 bis 5 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen. Die Copolymerisation der wesentlichen Monomeren (a) und (b) kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen wie Benzoin und Benzoinether, α-substituierte Benzoinverbindungen, wie α-Methylolbenzoin und α-Methylolbenzoinether, α-Methylbenzoin oder α-Phenylbenzoin. Auch sogenannte Triplett-Sensibilisatoren, wie Benzyldiketale, können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Polymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Propionsäure, hypophosphorige Säure und phosphorige Säure. Falls die Polymerisation in Gegenwart von Reglern durchgeführt wird, benötigt man davon 0,05 bis 20 Gew.%, bezogen auf die bei der Polymerisation eingesetzten Monomeren. Um Copolymerisate mit K-Werten von 30 bis 50 herzustellen, kann es gegebenenfalls zweckmäßig sein, die Copolymerisation zusätzlich in Gegenwart von Monomeren durchzuführen, die mindestens zwei ethylenisch ungesättigte, nichtkonjugierte Doppelbindungen im Molekül aufweisen. Bei dieser Gruppe von Monomeren handelt es sich beispielsweise um Vernetzer, wie Methylenbisacrylamid, Ester von Acrylsäure und Methacrylsäure mit mehrwertigen Alkoholen, Z.B. Glykoldiacrylat, Glycerintriacrylat, Glykoldimethacrylat, Glycerintrimethacrylat, sowie mindestens zweifach mit Acrylsäure oder Methacrylsäure veresterte Polyole ,wie Pentaerythrit und Glukose. Geeignete Vernetzer sind außerdem Divinylbenzol, Divinyldioxan, Pentaerythrittriallylether und Pentaallylsucrose. Falls bei der Copolymerisation Vernetzer eingesetzt werden, so beträgt ihre Menge bis zu 5 Gew.%, bezogen auf die gesamten Monomeren.

Bei der Substanzpolymerisation werden die Monomeren zusammen mit den Radikalbildnern erhitzt, wobei es meistens erforderlich ist, das Reaktionsgut auf Temperaturen oberhalb des Erweichungspunkts zu erhitzen, um die Masse fließfähig zu halten. Zweckmäßigerweise erfolgt die Herstellung kontinuierlich, um die hohe Polymerisationswärme sicher abführen zu können. Dabei werden meistens Polymere mit K-Werten in dem Bereich von 10 bis etwa 30 erhalten. Zur Herstellung von Copolymerisaten mit K-Werten von mehr als 30 bis 50 kann man sich der Fällungs- oder Suspensionspolymerisation bedienen. Bei der Fällungspolymerisation sind die Monomeren im Verdünnungsmittel löslich und die gebildeten Copolymeren unlöslich und fallen daher aus. Bei der Suspensionspolymerisation sind Monomere und Polymere im Verdünnungsmittel unlöslich. Um ein Zusammenkleben der Copolymerisatteilchen zu vermeiden, führt man die Copolymerisation zweckmäßigerweise in Gegenwart von Schutzkolloiden durch. Die Copolymerisate können nach Abschluß der Copolymerisation durch Abfiltrieren und Trocknen in fester Form isoliert werden. Die bevorzugte Polymerisationsmethode ist die Lösungspolymerisation, bei der Monomere und Copolymere im Lösemittel gelöst sind. Besonders geeignete Lösemittel für die Lösungspolymerisation sind Wasser, sekundäre Alkohole und Mischungen aus Wasser und sekundären Alkoholen. Sofern man Wasser als Lösemittel verwendet, muß die Polymerisation in Gegenwart von Reglern durchgeführt werden, weil sonst Copolymerisate mit zu hohem K-Wert entstehen. Polymerisiert man dagegen die Monomeren in sekundären Alkoholen, so kann auf die Mitverwendung von Reglern verzichtet werden, weil bekanntlich sekundäre Alkohole regelnd wirken.

Bei den genannten Polymerisationsverfahren wird die Polymerisation so geführt, daß die Polymerkonzentration 5 bis 80, vorzugsweise 10 bis 60 Gew.% beträgt. Die geeigneten Polymerisationstemperaturen betragen 20 bis 250, vorzugsweise 40 bis 180°C. In der Praxis liegen die besonders bevorzugten Temperaturen bei der Copolymerisation bei 60 bis 130°C. Sofern die Polymerisationstemperatur oberhalb des Siedepunkts des Lösemittels bzw. Lösemittelgemisches liegt, wird die Copolymerisation unter Druck durchgeführt. Wenn man die Copolymerisation in einem organischen Lösemittel durchführt, wird das Reaktionsgemisch nach Abschluß der Copolymerisation und gegebenenfalls einer Neutralisation einer Wasserdampfdestillation unterworfen, bei der das organische Lösemittel abdestilliert. Selbstverständlich ist es auch möglich, das organische Lösemittel aus

dem Reaktionsgemisch abzudestillieren und dann Wasser zuzusetzen, um eine Copolymerisatlösung zu erhalten. Falls gewünscht, wird das Copolymerisat neutralisiert. Die so erhältlichen wäßrigen Copolymerisatlösungen können direkt als Wasserbehandlungsmittel zur Verminderung der Kesselsteinabscheidung und der Wasserhärteausscheidung in wasserführenden Systemen verwendet werden. Möglich ist die Kombination der erfindungsgemäßen Polymeren mit anderen Dispergiermittel, wie Phosphonaten, Phosphonoalkancarbonsäuren etc.

Die Wirkungsweise der Copolymerisate als sog. Belagsverhinderer für die Wasserbehandlung besteht darin, die Bildung von Kristallen der Härtebildnersalze, wie Calciumcarbonat, Magnesiumoxid, Magnesiumcarbonat, Calcium-, Barium- oder Strontiumsulfat, Calciumphosphat (Apatit) und ähnliche im unterstöchiometrischen Dosierungsbereich zu verhindern oder die Bildung dieser Niederschläge so zu beeinflussen, daß keine harten und steinartigen Beläge entstehen, sondern leicht ausschwemmbare, im Wasser fein verteilte Ausscheidungen gebildet werden. Auf diese weise werden die Oberflächen von z.B. Wärmeaustauschern, Rohren oder Pumpenbauteilen von Belägen freigehalten und deren Korrosionsneigung vermindert. Insbesondere wird die Gefahr von Lochfraßkorrosion unter diesen Belägen verringert. Ferner wird das Aufwachsen von Mikroorganismen auf diesen Metalloberflächen erschwert. Durch den Einfluß der Belagsverhinderer kann die Lebensdauer von solchen Anlagen erhöht und Stillstandzeiten zur Reinigung von Anlagenteilen erheblich reduziert werden. Die hierzu benötigten Mengen von Belagsverhinderer betragen 0,1 bis 100, vorzugsweise 0,5 bis 25 ppm, bezogen auf die jeweilige Wassermenge. Bei den wasserführenden Systemen handelt es sich z.B. um offene oder geschlossene Kühlkreisläufe, beispielsweise von Kraftwerken oder chemischen Anlagen, wie Reaktoren, Destillationsapparaturen und ähnlichen Bauteilen, bei denen Wärme abgeführt werden muß. Der Einsatz dieser Belagsverhinderer kann auch in Boilerwässern und Dampferzeugern, vorzugsweise im Bereich von Wassertemperaturen unterhalb 150°C erfolgen. Eine bevorzugte Anwendung der erfindungsgemäß zu verwendenden Belagsverhinderer ist ferner die Entsalzung von Meer- und Brackwasser durch Destillation oder Membranverfahren, wie z.B. die umgekehrte Osmose oder Elektrodialyse. So wird z.B. beim sog. MSF-Destillationsverfahrens (Multistage Flash Evaporation) zur Meerwasserentsalzung eingedicktes Meerwasser mit erhöhter Temperatur im Umlauf gefahren. Die Belagsverhinderer unterbinden dabei wirksam die Ausscheidung von Härtebildnern, wie z.B. Brucit und deren Anbacken an Anlagebauteile.

Bei Membranverfahren kann die Schädigung der Membranen durch auskristallisierende Härtebildner wirksam verhindert werden. Auf diese Weise ermöglichen diese Belagsverhinderer höhere Eindickungsfaktoren, verbesserte Ausbeute an Reinwasser und längere Lebensdauer der Membranen. Eine weitere Anwendung der Belagsverhinderer ist z.B. beim Eindampfen von Zuckersäften aus Rohr- oder Rübenzucker gegeben. Im Gegensatz zu oben beschriebenen Anwendungen werden hier dem Zuckerdünnsaft zur Reinigung z.B. Calciumhydroxid, Kohlendioxid, Schwefeldioxid oder gegebenenfalls Phosphorsäure zugesetzt. Nach Filtration im Zuckersaft verbleibende schwerlösliche Calciumsalze, wie z.B. Calciumcarbonat, -sulfat oder -phosphat, fallen dann während des Eindampfprozesses aus und können als steinharte Beläge auf Wärmetauscheroberflächen auftreten. Dies gilt ebenso auch für Zuckerbegleitstoffe, wie Kieselsäure oder Calciumsalze organischer Säuren, wie z.B. Oxalsäure.

Ähnliches gilt für Verfahren, die sich an die Zuckergewinnung anschließen, so z.B. die Alkoholgewinnung aus Rückständen der Zuckerproduktion.

Die erfindungsgemäß als Belagsverhinderer einsetzbaren Copolymerisate sind in der Lage, die obengenannten Belagsbildungen weitgehend zu unterbinden, so daß Stillstandszeiten der Anlagen zur Reinigung, z.B. durch Auskochen, wesentlich verringert werden können. Ein wesentlicher Gesichtspunkt hierbei ist ferner die beträchtliche Energieeinsparung durch Vermeidung der genannten wärmeisolierenden Beläge.

Die in den beschriebenen Anwendungen nötigen Mengen des Belagsverhinderers sind unterschiedlich, betragen jedoch zwischen 0,1 und 100 ppm, bezogen auf eingesetztes Kühlwasser, Boilerwasser, Prozeßwasser oder z.B. Zuckersaft.

Die erfindungsgemäß zu verwendenden Produkte weisen eine bessere Dispergierung gegenüber Härtebildnersalzen, wie Ca-Carbonat, Ca-Sulfat und Ca-Phosphat auf und sind ferner besser verträglich mit Ca-Ionen als Homopolymerisate der Acrylsäure.

Die K-Werte der Copolymerisate wurden nach H. Fikentscher, Cellulosechemie, Band 13, 48 bis 64 und 71 bis 74 (1932) in wäßriger Lösung bei einem pH-Wert von 7, einer Temperatur von 25°C und einer Polymerkonzentration des Natriumsalzes des Copolymerisats von 1 Gew.% bestimmt. Die Angaben in Prozent beziehen sich auf das Gewicht der Stoffe.

Beispiele

Herstellung der Copolymerisate

Copolymerisat 1

In einem Reaktor, der mit Kühler, Thermometer, Zulaufvorrichtungen, Stickstoffeinlaß und -auslaß versehen ist, wird eine Lösung von 1,9 g phosphoriger Säure in 370 g Wasser zum Sieden erhitzt. Innerhalb von 4 Stunden gibt man dazu gleichmäßig 590 g Acrylsäure, eine Lösung von 63,6 g N-Vinylimidazol in 100 g wasser, eine Lösung von 54 g 2-Mercaptoethanol in 50 g Wasser, eine Lösung von 6,4 g Natriumpersulfat und 0,6 g 2,2'-Azobis(2-methylpropionamidin)dihydrochlorid in 125 g wasser und hält das Reaktionsgemisch während der Zulaufzeit beim schwachen Sieden. Nach Beendigung der Monomer- und Initiatorzugabe wird das Reaktionsgemisch noch 1 Stunde zum Sieden erhitzt, dann mit 620 g 50 %iger wäßriger Natronlauge bis zu einem pH-wert von 7,5 neutralisiert. Der Trocknungsrückstand beträgt 44 %, der K-wert des Copolymerisates 39.

Copolymerisat 2

Man verfährt wie im Beispiel 1 beschrieben, verwendet jedoch 524 g Acrylsäure und 127,2 g N-vinylimidazol und neutralisiert nach Beendigung der Copolymerisation die wäßrige Copolymerisatlösung durch Zusatz von 540 g 50 %iger wäßriger Natronlauge bis zu einem pH-wert von 7,3. Der Trocknungsrückstand beträgt 45 %, der K-Wert des Copolymerisates 47,5.

Copolymerisat 3

In einem Reaktor aus Stahl, der für das Arbeiten unter Druck ausgelegt ist, werden 1028,5 g einer Mischung aus 75 Gew.% Isopropanol und 25 Gew.% wasser sowie 72 g 30 %iges Wasserstoffperoxid vorgelegt. Der Reaktor wird 3 mal mit Stickstoff bis zu einem Druck von 3 bar abgepresst und wieder entspannt. Der Reaktor wird dann druckdicht verschlossen und der Inhalt des Reaktors unter Rühren auf eine Temperatur von 120°C erhitzt. Sobald diese Temperatur erreicht ist, werden 508 g eines Gemisches aus 75 % Isopropanol und 25 % wasser, 1758,5 g Acrylsäure und 189,5 g N-Vinylimidazol und separat davon innerhalb von 8 Stunden gleichmäßig eine Mischung aus 122 g 30 %igem Wasserstoffperoxid und 250 g Isopropanol zudosiert. Der Druck im Polymerisationsreaktor wird während der Polymerisation bei 3 bar konstant gehalten. Nach Beendigung der Initiatorzugabe wird das Reaktionsgemisch noch 2 Stunden auf 120°C erhitzt und danach unter Abdestillieren einer Teilmenge Isopropanol entspannt und anschließend durch Einleiten von Wasserdampf restliches Isopropanol abdestilliert. Das Reaktionsgemisch wird danach auf 50°C abgekühlt und durch Zusatz von 1850 g 50 %iger wäßriger Natronlauge neutralisiert. Der pH-wert der wäßrigen Lösung beträgt 8, der Trocknungsrückstand 46,5 % und der K-wert des Copolymerisats 30,2.

Copolymerisat 4

In dem Reaktor, in dem das Copolymerisat 3 hergestellt wurde, werden 1028,5 g Isopropanol und 78,6 g 30 %iges Wasserstoffperoxid vorgelegt, 3 mal mit 3 bar Stickstoff zum Inertisieren abgepresst und darin nach dem druckdichten Verschlitßen des Reaktors auf 120°C erhitzt, wobei sich ein Druck von 3 bar einstellt. Sobald der Reaktorinhalt eine Temperatur von 120°C hat, dosiert man gleichmäßig innerhalb von 5 Stunden eine Mischung aus 908 g Isopropanol, 1516 g Acrylsäure, 189,5 g N-Vinylimidazol und 189,5 g Acrylamidomethylpropansulfonsäure und getrennt davon innerhalb von 6 Stunden eine Lösung von 133 g 30 %igem Wasserstoffperoxid in 270 g Isopropanol zu. Nach Beendigung der Initiatorzugabe wird das Reaktionsgemisch noch 2 Stunden bei 120°C nachpolymerisiert, danach entspannt und Isopropanol abdestilliert. Das Reaktionsgemisch wird auf 50°C abgekühlt und mit 1950 g 50 %iger wäßriger Natronlauge bis zu einem pH-wert von 8,1 neutralisiert. Der Feststoffgehalt der wäßrigen Lösung beträgt 45,1 %, der K-wert des Copolymerisats 33,2.

Copolymerisat 5

In dem Reaktor, in dem das Copolymerisat 1 hergestellt wurde, legt man eine Lösung von 1,9 g phosphoriger Säure in 370 g wasser vor und erhitzt die Lösung zum Sieden. Dann gibt man innerhalb von 4 Stunden gleichmäßig 573,3 g Acrylsäure und eine Lösung von 106 g 1-Vinyl-3-methylimidazoliumchlorid in 58 g Wasser, eine Lösung von 54 g 2-Mercaptoethanol in 50 g Wasser und eine Lösung von 6,4 g Natriumpersulfat und 0,64 g 2,2'-Azobis(2-methylpropionamidin)hydrochlorid in 125 g Wasser zu. Nach Beendigung der Initiator- und Monomerzugabe wird das Reaktionsgemisch noch 2 Stunden auf eine Temperatur von 100°C erhitzt, dann auf 50°C abgekühlt und durch Zugabe von 590 g 50 %iger wäßiger Natronlauge neutralisiert. Der Feststoffgehalt der wäßrigen Lösung beträgt 44,5 %. Das Copolymerisat hat einen K-Wert von 17,7.

Copolymerisat 6

In dem Reaktor, in dem das Copolymerisat 1 hergestellt wurde, legt man eine Lösung von 1,9 g phosphoriger Säure in 370 g destilliertem Wasser vor und erhitzt sie auf eine Temperatur von 95°C. Dazu fügt man dann gleichmäßig innerhalb von 4 Stunden eine Lösung von 508,8 g Acrylsäure, 35 g Wasser und 127,2 g N-Vinylimidazol, eine Lösung von 54 g Mercaptoethanol in 50 g wasser und separat davon eine Lösung von 3,2 g Natriumpersulfat und 3,2 g 2,2'-Azobis(2-methylpropionamidin)hydrochlorid in 130 g Wasser. Man erhält eine wäßrige Lösung eines Copolymerisates mit einem Feststoffgehalt von 45,6 % und einem K-Wert von 20,3.

Copolymerisat 7

In dem Reaktor, in dem das Copolymerisat 3 hergestellt wurde, legt man 1028,5 g Isopropanol und 78,6 g 30 %iges Wasserstoffperoxid vor, presst den Reaktor 3 mal mit 3 bar Stickstoff zum Inertisieren ab und erhitzt nach dem druckdichten Verschließen den Reaktorinhalt auf eine Temperatur von 120°C. Dabei stellt sich ein Druck von 3 bar ein. Sobald die Temperatur von 120°C erreicht ist, fügt man gleichmäßig innerhalb von 5 Stunden eine Mischung von 1327 g Acrylsäure, 529 g Isopropanol, 189,5 g N-Vinylimidazol, 379 g einer 25 %igen wäßrigen Acrylamidomethylpropansulfonsäurelösung und 758 g einer 25 %igen wäßrigen Acrylamidlösung und separat davon in 6,5 Stunden eine Lösung von 133 g 30 %igem Wasserstoffperoxid in 271 g Isopropanol zu. Nach Beendigung der Initiatorzugabe wird das Reaktionsgemisch noch 1 Stunde bei einer Temperatur von 120°C gerührt und danach unter Abdestillieren von Isopropanol langsam entspannt. Anschließend leitet man Wasserdampf in das Reaktionsgemisch, um das Isopropanol abzudestillieren. Man leitet solange Wasserdampf ein, bis das Reaktionsgemisch eine Temperatur von 100°C erreicht hat. Dann wird es auf 50°C abgekühlt und durch Zugabe von 1200 g einer 50 %igen wäßrigen Natronlauge neutralisiert. Die Lösung hat einen pH-Wert von 8 und einen Feststoffgehalt von 43,4 %. Der K-Wert des Copolymerisates beträgt 24,5.

Copolymerisat 8

In dem Reaktor, in dem das Copolymerisat 3 hergestellt wurde, legt man 1028 g einer Mischung aus 75 % sek.-Butanol und 25 % Wasser und 78,6 g 30 %igem Wasserstoffperoxid vor, presst den Reaktor 3 mal mit 3 bar Stickstoff zum Inertisieren ab und erhitzt den Reaktorinhalt nach dem druckdichten verschließen des Reaktors auf eine Temperatur von 120°C. Sobald diese Temperatur erreicht ist, dosiert man innerhalb von 5 Stunden eine Lösung von 908 g sek.-Butanol, 1326,5 g Acrylsäure, 189,5 g N-Vinylimidazol und 379 g Acrylamidomethylpropansulfonsäure und innerhalb von 6,5 Stunden gleichmäßig eine Lösung von 133 g 30 %igem Wasserstoffperoxid in 270 g einer Mischung aus 70 Gew.% sek.-Butanol und 30 Gew.% wasser zu. Nach Beendigung der Initiatorzugabe wird das Reaktionsgemisch noch 2 Stunden bei 120°C nachpolymerisiert, dann langsam entspannt, wobei das sek.-Butanol abdestilliert. Durch Einleiten von Wasserdampf wird das restliche sek.-Butanol bis zu einer Innentemperatur von 100°C abdestilliert. Der Reaktorinhalt wird dann auf 50°C abgekühlt und durch Zugabe von 1500 g 50 %iger wäßriger Natronlauge neutralisiert. Man erhält eine Copolymerisatlösung mit einem pH-Wert von 7 und einem Feststoffgehalt von 51,6 %. Der K-wert des Copolymerisats beträgt 22,6.

Copolymerisat 9

In dem Reaktor, in dem das Copolymerisat 3 hergestellt wurde, werden 1028,5 g eines Gemisches aus 75 % Isopropanol und 25 % Wasser und 78,6 g 30 %iges Wasserstoffperoxid vorgelegt, 3 mal mit 3 bar Stickstoff zum Inertisieren abgepresst und nach dem druckdichten Verschließen des Reaktors auf eine Temperatur von 130°C erhitzt. Bei dieser Temperatur fügt man innerhalb von 6 Stunden eine Mischung aus 1706 g Acrylsäure, 189,5 g N-vinylimidazol und 961 g eines Gemisches aus 75 % Isopropanol und 25 % wasser und getrennt davon innerhalb von 8 Stunden eine Lösung von 133 g 30 %igem Wasserstoffperoxid und 251 g eines Gemisches aus 75 % Isopropanol und 25 % Wasser zu. Nach Beendigung des Initiatorzugabe wird das Reaktionsgemisch noch 2 Stunden unter Rühren bei 130°C nachpolymerisiert und vorsichtig unter Abdestillieren von Isopropanol entspannt. Nach dem Druckausgleich mit der Atmosphäre leitet man Wasserdampf ein, um das restliche Isopropanol zu entfernen. Danach wird das Reaktionsgemisch auf eine Temperatur von 50°C abgekühlt und mit 1890 g einer 50 %igen wäßrigen Natronlauge bis zu einem pH-wert von 8,1 neutralisiert. Man erhält eine Copolymerisatlösung mit einem Feststoffgehalt von 51,2 %. Der K-wert des Copolymerisates beträgt 26,4.

Copolymerisat 10 (Vergleich)

Handelsübliches Homopolymerisat der Acrylsäure mit einem K-Wert von 30.

Die oben beschriebenen Copolymerisate wurden auf ihre Eignung aus Wasserbehandlungsmittel folgenden Testen unterworfen:

$CaSO_4$-Test

500 ml einer gesättigten $CaSO_4$-Lösung werden bei 200°C im Trockenschrank auf 200 g eingedampft. Man läßt die Mischung über Nacht stehen und filtriert am nächsten Tag durch einen Membranfilter (0,45 µm).

50 ml des Filtrats werden mit einer wäßrigen 0,2 M-Lösung von $Na_2H_2$ EDTA (EDTA = Ethylendiamintetraessigsäure) titriert und der noch gelöste Ca-Anteil bestimmt. Die Inhibierung bei Zugabe von 1 ppm Polymer wird berechnet gegen einen Blindversuch ohne Polymerzugabe.

$$\text{\% Inhibierung: } 100 \left( 1 - \frac{\text{mg } CaSO_4 \text{ auf Filter (mit 1 ppm Polymer)}}{\text{mg } CaSO_4 \text{ auf Filter (Blindversuch ohne Polymer)}} \right)$$

$CaCO_3$-Test

Es wird eine wäßrige Prüflösung aus den Komponenten A und B hergestellt:

A = 3,36 g $NaHCO_3$/l

B = 1,58 g $CaCl_2$ - $2H_2O$/l und
0,88 g $MgSO_4$/l

Je 100 ml der obigen Lösungen werden in eine 250 ml Flasche pipetiert mit 5 ppm Dispergiermittel versetzt, zugeschlossen und 16 Stunden bei 86°C gelagert. Nach Abkühlen auf Raumtemperatur und Filtration wird die Lösung zur Bestimmung des gelösten Ca-Anteils mit einer 0,2 M-Lösung von $Na_2H_2$ EDTA titriert.

$$\text{\% Inhibierung: } 100 \left( 1 - \frac{\text{mg CaO auf Filter (mit Polymer)}}{\text{mg CaO auf Filter (Blindversuch ohne Polymer)}} \right)$$

$Ca_3(PO_4)_2$-Test

Es werden 100 ml einer Lösung mit folgenden Konzentrationen hergestellt:

1,095 g/l $CaCl_2 \cdot 6H_2O$
0,019 g/l $Na_2HPO_4 \cdot 2H_2O$
2 ppm Polymer

Der pH-Wert wird mit einem Borax-Puffer auf 8,6 eingestellt. Die Lösung wird nun 3 Stunden bei 70°C gerührt und 24 Stunden stehen gelassen. Nach dieser Zeit wird die Lichtdurchlässigkeit (LD, Weißlicht) mit einem Photometer gemessen. Der Photometer wird vorher mit destilliertem Wasser auf 100 % LD eingestellt.

$$\text{\% Inhibierung: } \left( 1 - \frac{100 - \text{LD mit 2 ppm Polymer}}{100 - \text{LD einer Blindprobe ohne Polymer}} \right) \times 100$$

Ca-Ionenverträglichkeit

Es werden 200 ml einer Lösung mit folgender Zusammensetzung hergestellt:

1,565 g $CaCl_2 \cdot 6H_2O$/l

3 g KCl/l

45 ppm Polymer

Der pH-Wert wird mit NaOH auf 9 eingestellt und die Lösung anschließend 30 Minuten gekocht. Die abgekochte Lösung wird nun mit destilliertem Wasser auf 200 ml aufgefüllt und die Lichtdurchlässigkeit (LD) gemessen (LD für dest. Wasser = 100 %). Je höher der LD-Wert desto besser ist die Verträglichkeit des Produktes gegenüber Ca-Ionen.

Die Prüfergebnisse sind in der Tabelle angegeben.

| Beisp. | Copolymerisat Nr. | K-Wert | % Inhibierung | | | LD % (Polymertrübung) |
|---|---|---|---|---|---|---|
| | | | $CaSO_4$ | $CaCO_3$ | $Ca_3(PO_4)_2$ | |
| 1 | 1 | 39 | 35 | 53 | 58 | 83 |
| 2 | 2 | 47,5 | 42 | 45 | 72 | 92 |
| 3 | 3 | 30 | 47 | 49 | 66 | 97 |
| 4 | 4 | 33 | 27 | 43 | 63 | 91 |
| 5 | 5 | 17,7 | 39 | 55 | 73 | - |
| 6 | 6 | 20,3 | 48 | 39 | 70 | - |
| 7 | 7 | 24,5 | 41 | 23 | 78 | - |
| 8 | 8 | 22,6 | 51 | 30 | 72 | 100 |
| 9 | 9 | 26,4 | 39 | 56 | 77 | 97 |
| Vergleichsbeisp.10 (Homopolymerisat der Acrylsäure | | 30 | 29 | 45 | 61 | <60 |

Wie aus der Tabelle ersichtlich ist, haben die Copolymerisate 2, 3, 5 und 9 bei allen Tests eine verbesserte Wirksamkeit gegenüber dem Homopolymerisat der Acrylsäure. Diese Copolymerisate sind insbesondere zur Behandlung von solchen wasserführenden Systemen geeignet, die hohe Ca-Ionenkonzentrationen aufweisen, z.B. bei der Zuckersafteindampfung.

Die Copolymerisate 1, 4, 6, 7 und 8 sind bei 3 von 4 Tests besser als das Homopolymerisat der Acrylsäure.

## Patentansprüche

1. Verwendung von wasserlöslichen Copolymerisaten, die als charakteristische Monomere
   (a) 99 bis 50 Gew.% monoethylenisch ungesättigte Carbonsäuren mit 3 bis 8 C-Atomen oder deren Salze und
   (b) 1 bis 50 Gew.% an Monomeren der Formel

   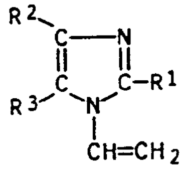

   (I),

   in der $R^1$, $R^2$, $R^3$ = H, $C_1$- bis $C_4$-Alkyl, Phenyl und Benzyl bedeuten, deren Salze oder Quaternierungsprodukte

   einpolymerisiert enthalten und die K-Werte von 10 bis 50 (bestimmt nach H. Fikentscher in 1 %iger wäßriger Lösung bei pH 7 und 25°C) haben, als Scale-Inhibitoren.

2. Verwendung nach Anspruch 1, dadurch gekennzeichnet, daß die Copolymerisate als weitere Gruppe von Monomeren

(c) 0 bis 20 Gew.% andere, mit den Monomeren (a) und (b) copolymerisierbare monoethylenisch ungesättigte Monomere

einpolymerisiert enthalten.

3. Verwendung nach Anspruch 1 oder 2, dadurch gekennzeichnet, daß die Copolymerisate
   (a) 95 bis 70 Gew.% Acrylsäure, Methacrylsäure und/oder Maleinsäure und
   (b) 5 bis 30 Gew.% N-Vinylimidazol einpolymerisiert enthalten.

4. Verwendung nach einem der Ansprüche 1 bis 3, dadurch gekennzeichnet, daß die Copolymerisate in Mengen von 0,1 bis 100 ppm, bezogen auf das zu behandelnde wäßrige Medium, eingesetzt werden.

5. Verwendung der wasserlöslichen Copolymerisate nach einem der Ansprüche 1 bis 3 in wasserführenden Systemen als Belagsverhinderer.

6. Scale-Inhibitoren, dadurch gekennzeichnet, daß sie aus wasserlöslichen Copolymerisaten bestehen, die als charakteristische Monomere
   (a) 99 bis 50 Gew.% monoethylenisch ungesättigte Carbonsäuren mit 3 bis 8 C-Atomen oder deren Salze und
   (b) 1 bis 50 Gew.% an Monomeren der Formel

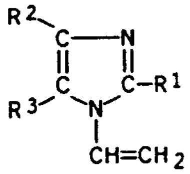

(I),

in der $R^1$, $R^2$, $R^3$ = H, $C_1$- bis $C_4$-Alkyl, Phenyl und Benzyl bedeuten, deren Salze oder Quaternierungsprodukte

einpolymerisiert enthalten und die K-Werte von 10 bis 50 (bestimmt nach H. Fikentscher in 1 %iger wäßriger Lösung bei pH 7 und 25°C) haben.

## Claims

1. The use of water-soluble copolymers which contain, polymerized in, as characteristic monomers
   (a) 99 to 50% by weight of monoethylenically unsaturated carboxylic acids with 3 to 8 carbon atoms or their salts and
   (b) 1 to 50 % by weight of monomers of the formula

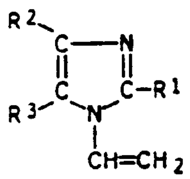

(I)

where $R^1$, $R^2$ and $R^3$ are H, $C_1$-$C_4$-alkyl, phenyl or benzyl, their salts or products of quaternization

and which have R valuer of from 10 to 50 (determined in 1% strength aqueous solution at pH 7 and 25°C by the method of H. Fikentscher), as scale inhibitors.

2. The use as claimed in claim 1, wherein the copolymers contain, polymerized in, as a further group of monomers
   (c) 0 to 20% by weight of other monoethylenically unsaturated monomers which can be copolymerized with monomers (a) and (b).

3. The use as claimed in claim 1 or 2, wherein the copolymers contain, polymerized in,
   (a) 95 to 70% by weight of acrylic acid, methacrylic acid and/or maleic acid and
   (b) 5 to 30% by weight of N-vinylimidazole.

4. The use as claimed in any of claims 1 to 3, wherein the copolymers are used in amounts of from 0.1 to 100 ppm based on the aqueous medium to be treated.

5. The use of the water-soluble copolymers as claimed in any of claims 1 to 3 to prevent deposits in water-conveying systems.

6. A scale inhibitor which is composed of water-soluble copolymers which contain, polymerized in, as characteristic monomers
(a) 99 to 50% by weight of monoethylenically unsaturated carboxylic acids with 3 to 8 carbon atoms or their salts and
(b) 1 to 50 % by weight of monomers of the formula

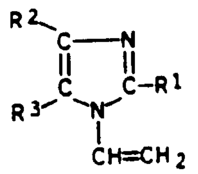

(I)

where $R^1$, $R^2$ and $R^3$ are H, $C_1$-$C_4$-alkyl, phenyl or benzyl, their salts or products of quaternization and which have K values of from 10 to 50 (determined in 1% strength aqueous solution at pH 7 and 25°C by the method of H. Fikentscher).

## Revendications

1. Utilisation de copolymères solubles dans l'eau, qui contiennent, à titre de monomères caractéristiques,
(a) 99 à 50% en poids d'acides carboxyliques comportant de 3 à 8 atomes de carbone et monoéthyléniquement insaturés, ou de leurs sels et
(b) 1 à 50% en poids de monomères de la formule

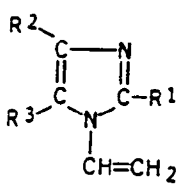

(I)

dans laquelle $R^1$, $R^2$, $R^3$ représentent chacun un atome d'hydrogène, un radical alkyle en $C_1$ à $C_4$, un radical phényle ou un radical benzyle, de leurs sels, ou de leurs produits de quaternisation,
incorporés par polymérisation et qui possèdent des valeurs K de 10 à 50 (déterminées selon H. Fikentscher en solution aqueuse à 1% à un pH de 7 et une température de 25°C), à titre d'inhibiteurs d'incrustations.

2. Utilisation suivant la revendication 1, caractérisée en ce que les copolymères contiennent, à titre d'autres groupes de monomères,
(c) 0 à 20% en poids d'autres monomères monoéthyléniquement insaturés, copolymérisables avec les monomères (a) et (b).

3. Utilisation suivant la revendication 1 ou 2, caractérisée en ce que les copolymères contiennent
(a) 95 à 70% en poids d'acide acrylique, d'acide méthacrylique et/ou d'acide maléique et
(b) 5 à 30% en poids de N-vinylimidazole,
incorporés par polymérisation.

4. Utilisation suivant l'une quelconque des revendications 1 à 3, caractérisée en ce que l'on met les copolymères en oeuvre en proportions de 0,1 à 100 ppm, par rapport au milieu aqueux à traiter.

5. Utilisation des copolymères solubles dans l'eau suivant l'une quelconque des revendications 1 à 3, à titre d'agents réducteurs de dépôts dans des systèmes de conduites d'eau.

6. Inhibiteurs d'incrustations, caractérisés en ce qu'ils se composent de copolymères solubles dans l'eau qui contiennent, à titre de monomères caractéristiques,

(a) 99 à 50% en poids d'acides carboxyliques comportant de 3 à 8 atomes de carbone et monoéthyléniquement insaturés, ou de leurs sels et

(b) 1 à 50% en poids de monomères de la formule

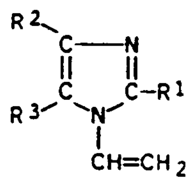

(I),

dans laquelle $R^1$, $R^2$, $R^3$ représentent chacun un atome d'hydrogène, un radical alkyle en $C_1$ à $C_4$, un radical phényle ou un radical benzyle, de leurs sels, ou de leurs produits de quaternisation,

incorporés par polymérisation et qui possèdent des valeurs K de 10 à 50 (déterminées selon H. Fikentscher en solution aqueuse à 1% à un pH de 7 et une température de 25°C), à titre d'inhibiteurs d'incrustations.